# EUROPEAN PATENT SPECIFICATION

(11) **EP 4 609 186 B1**
(45) Date of publication and mention of the grant of the patent: **09.12.2026**
(21) Application number: 23793875.8
(22) Date of filing: 23.10.2023
(51) Int. Cl.: G01N 27/447

(54) **CAPILLARY GEL ELECTROPHORESIS SEPARATION OF DIASTEREOMERS OF PHOSPHOROTHIOATED OLIGONUCLEOTIDES**
ELEKTROFORETISCHE TRENNUNG VON DIASTEREOISOMEREN VON PHOSPHOROTHIOAT-OLIGONUKLEOTIDEN
SÉPARATION PAR ÉLECTROPHORÈSE SUR GEL CAPILLAIRE DE DIASTÉRÉOMÈRES D'OLIGONUCLÉOTIDES PHOSPHOROTHIOGÈNES

(30) Priority: 25.10.2022 EP 22203518
(43) Date of publication of application: 03.09.2025
(73) Proprietor: Synthon B.V., 6545 CM Nijmegen (NL)
(72) Inventor: DURC, Pavol, 67817 Blansko (CZ)
(74) Representative: Tejedor Vinent, Henar
(86) International application number: PCT/EP2023/079519
(87) International publication number: WO 2024/088984

(56) References cited:
- US-A- 5 264 101
- US-A- 5 420 265
- US-A- 5 627 277
- US-A- 5 643 717
- US-B2- 7 045 048
- WEI BINGCHUAN ET AL: "Analysis of therapeutic nucleic acids by capillary electrophoresis", JOURNAL OF PHARMACEUTICAL AND BIOMEDICAL ANALYSIS, ELSEVIER B.V, AMSTERDAM, NL, vol. 219, 5 July 2022 (2022-07-05), pages 1 - 11, XP087150049, ISSN: 0731-7085, [retrieved on 20220705], DOI: 10.1016/J.JPBA.2022.114928

## Description

### BACKGROUND OF THE PRESENT INVENTION

Capillary gel electrophoresis (CE) is a type of electrophoresis in which charged biomolecules are separated based on their size and charge by filling a capillary tube with a gel matrix and applying the electrical field. This technique can also be used for the separation of isomers of biomolecules, for instance diastereomers of oligonucleotides.

The use of capillary gel electrophoresis for the separation of DNA diastereomers is described in Electrophoresis 2000, 21, 2999-3009 wherein the difficulties related to the separation of DNA diastereomers are explained as well as some improved electrophoresis conditions that result in a maximum separation of 8 diastereomers of phosphorothioate oligonucleotides.

However, most of the commercially available pharmaceutical products comprising phosphorothioate oligonucleotides have a higher amount of diastereomers. It is therefore important to provide a method that is robust and allows identification of different diastereomers in more complex mixtures. US5627277A discloses a method of identification and characterization of diastereomers mixtures of phosphorothioate oligonucleotides by capillary gel electrophoresis.

### DETAILED DESCRIPTION OF THE PRESENT INVENTION

The present invention relates to a method for the separation and/or characterization of diastereomers of phosphorothioate oligonucleotides by capillary gel electrophoresis and the use of this method to differentiate between batches with different diastereomers composition of phosphorothioate oligonucleotides and select the ones that complies with a predetermined specification.
Claim 1 of the invention relates to a method of identification and/or characterization of diastereomers mixtures of nusinersen by capillary gel electrophoresis with a background electrolyte that has a pH 6 to 8, comprising the steps of:
a. Preparing a gel matrix by dissolving a water soluble polymer containing a side chain having a functional group that interacts with diastereomers mixture to be analysed in a background electrolyte(BGE);
b. Introducing the gel matrix in the capillary;
c. Introducing the sample of diastereomers mixture of nusinersen to capillary;
d. Applying an electric field greater than 200 volts/cm of capillary across the gel matrix in the capillary;
e. Detecting the individual diastereomers and/or the characteristic groups of partially separated diastereomers of phosphorothioate oligonucleotides.

A number of forms of electrophoretic separations are known in the art. These include, but are not limited to, slab gel, capillary electrophoresis, electrofiltration, differential in gel electrophoresis, zone electrophoresis, isoelectric focusing, native electrophoresis, 2-dimensional electrophoresis, immunochemical/immunofixation electrophoresis, immobilized pH gradient electrophoresis, microchips, moving boundary, isotachophoresis, pulsefield electrophoresis, as well as combinations of these.

These technics are well known in the art and are taught extensively in the literature, including: Beckman Coulter's booklet "Introduction to Capillary Electrophoresis", Whatley, H., "Basic Principles and Modes of Capillary Electrophoresis", in Petersen and Mohammad, eds., and Lauer and Rozing, eds., "High Performance Capillary Electrophoresis", 2nd Ed., Agilent Technologies, Inc., Santa Clara, CA (2014).

In gel electrophoresis, analytes are subjected to an electric force, which causes the analytes to migrate through the gel.

The gel used in gel electrophoretic separations may be created by any means known in the art. In the invention, a preferred method to prepare the gel is dissolving the water soluble polymer containing a side chain having a functional group that interacts with the diastereomers mixture to be analysed in background electrolyte, but optionally the water soluble polymer containing a side chain having a functional group that interacts with diastereomers mixture to be analysed can be dissolved in water, followed by introduction of background electrolyte to form a matrix.

Background electrolyte is a solution of a buffering salt. The background electrolyte used in the present invention has a pH from 6 to 8, more preferably the pH is from 6.2 to 7.8 most preferred the pH is from 6.5 to 7.5.

Background electrolyte solutions to be used according to the invention are 2-(N-morpholino)ethanesulfonic acid(MES)/histidine(HIS), 2-[4-(2-Hydroxyethyl)piperazin-1-yl]ethane-1-sulfonic acid (HEPES)/HIS or HEPES/2-[Bis(2-hydroxyethyl)amino]-2-(hydroxymethyl)-1,3-propanedio (Bis-Tris).

Each component of the background electrolyte solutions is independently preferably in the a concentration range from 0.02 to 0.3M, more preferably from 0.05 to 0.25M, even more preferably from 0.1 to 0.22M, most preferred from 0.15 to 0.2M.

The polymers to be used according to the present invention are water soluble polymers containing a side chain having a functional group that interacts with diastereomers mixture to be analysed.

Examples of functional groups of this side chain are CO, COOR, CONH₂, COOH, where R can be defined as a lineal or cyclic alkyl, akenyl or akynil group.

Examples of polymers containing a side chain having a functional group that interacts with diastereomers mixture to be analysed are: polyvinylpyrrolidone (PVP), "co-polymer of PVP and vinyl acetate" or Poly(2-ethyl-2-oxazoline) (PEOX). For instance, PVP 40,000; PVP 360,000; PVP 1,300,000; Poly(1-vinylpyrrolidone-co-vinyl acetate) 50,000, PEOX 50.000 or PEOX 500.000 can be used as a polymer.

PVP 1.3M and "co-polymer of PVP and vinyl acetate" are used.

The water soluble polymer containing a side chain having a functional group that interacts with diastereomers mixture to be analysed from the invention is preferably used in a concentration of more than 3% w/v, more preferably 3-30% w/v, even more preferably from 5-20% w/v.

In many instruments, the gel is disposed in one or more containers, the end of a capillary is introduced into the gel, and the gel is driven into the capillary, typically by air pressure.

Alternatively, the gel may be disposed in a cartridge and driven into a capillary fluidly connected to the cartridge, facilitating changes of gel in the capillary between analyses of samples. The cartridges are typically designed for use in an analytical instrument configured to accept them, such as the gel cartridges configured for use with a GL1000 glycan analyzer (BiOptic Inc., New Taipei City, Taiwan (R.O.C)), and preferably allow quick changes of gels, expediting a series of analyses. Typically, the gel is made in bulk, dispensed into cartridges, and cartridges already filled with the gel of choice are then purchased by the practitioner intending to use the cartridge to perform capillary gel electrophoresis separations in an instrument configured to receive the cartridge.

Most current capillary electrophoresis instruments are designed to wash the capillary between each run of sample and to introduce fresh gel into the capillary. Such washes are referred to as "regenerating" or "conditioning" the capillary, and are used in many CE protocols to improve reproducibility. D. Heiger, "High performance capillary electrophoresis, and introduction" (Agilent Technologies, Publication 5968-9963E, Germany, 2000) ("Heiger"), p. 92, for example, states that capillaries can be conditioned by washing them with a strong base, with a strong acid, with an organic compound such as methanol or DMSO, or with a detergent, and following the wash by a rinse.

In another embodiment, the temperature of the capillary is thermostated to temperatures from 5 to 25°C, preferably from 7 to 20°C, more preferably from 10 to 15°C.

Once the gel is in the capillary, the sample is contacted with the gel by means known by the skilled person. For instance, introducing the sample dissolved in water or background electrolyte into the capillary by electrokinetic injection or hydrodynamic injection. The use of an electrokinetic injection is preferred.

Once the sample is loaded to the capillary, an electric field is applied. A field greater than 200 volts/cm of capillary, more preferably a field greater than 400 volts/cm of capillary, even more preferably a field from 400 to 1000 volts/cm of capillary, most preferred a field from 500 to 700 volts/cm of capillary is applied.

The sample is then run through the gel, and the diastereomers and/or the characteristic groups of partially separated diastereomers of phosphorothioate oligonucleotides are detected by UV, infrared, fluorescence, laser-induced fluorescence or other external monitoring methods. In a preferred embodiment, a UV detector is used. The preferred wavelength if the UV detector is used is from 240 to 280 nm, preferably 260nm.

In a preferred embodiment, diastereomers of nusinersen are totally or partially separated and/or characterized with a capillary gel electrophoresis method with a background electrolyte that has a pH 6.5 to 7.5.

The method of the invention is very robust and can be used to totally or partially separate diastereomers of phosphorothioate oligonucleotides of any length. In a preferred embodiment, the phosphorothioate oligonucleotide is at least a 5-mer.

Phosphorothioate oligonucleotide may encompass oligonucleotides where all internucleoside bonds are of phosphorous-sulphur type and oligonucleotide that comprises a mixture of both bonds; phosphorous-sulphur and phosphorous-oxygen.

In phosphorothioate oligonucleotides, when an oxygen is substituted with a sulphur, generates a chiral center. These chiral centers generate diastereomers. The method of the present invention can be applied to any phosphorothioate oligonucleotide with chiral centers that generate diastereomers. Examples of these phosphorothioate oligonucleotides are: nusinersen, inotersen, volanesoren, inclisiran, givosiran, lumasiran, nedosiran, vutrisiran, cemdisiran and fitusiran.

For instance, nusinersen is a phosphorothioate antisense oligonucleotide consisting of 18 nucleotide residues which is used for treatment of Spinal muscular atrophy (SMA). Nusinersen exhibits stereoisomerism due to the presence of multiple chiral centers. In total nusinersen has 2¹⁷= 131072 isomers.

The method of the invention as described above is particularly useful when an oligonucleotide has a higher number of nucleotides and the total separation of the diastereomers is complex. In practice the method of the invention can be used to discriminate between batches with different diastereomers composition of phosphorothioate oligonucleotides as well as to evaluate sameness between batches by comparing the electropherogram of different batches manually (such as visual inspection by the practitioner of the method or comparison of the different samples by comparing the migration times in the peak tops) or it may be automated (such as statistically evaluation).

The method of the invention can be used for batch release or for in process control during the synthesis of a phosphorothioate oligonucleotide. For instance to select and/or discriminate batches during the synthesis of a phosphorothioate oligonucleotide.

In another embodiment, the capillary gel electrophoresis method from the invention can be used to differentiate between batches with different diastereomers composition of nusinersen by comparing the electropherogram. This comparison may be used to show the regulatory authorities sameness with the marketed product nusinersen.

The present invention is illustrated by the following Examples.

All CE analyses in the following examples were performed using Agilent 7100

### Capillary electrophoresis system.

### Example 1:

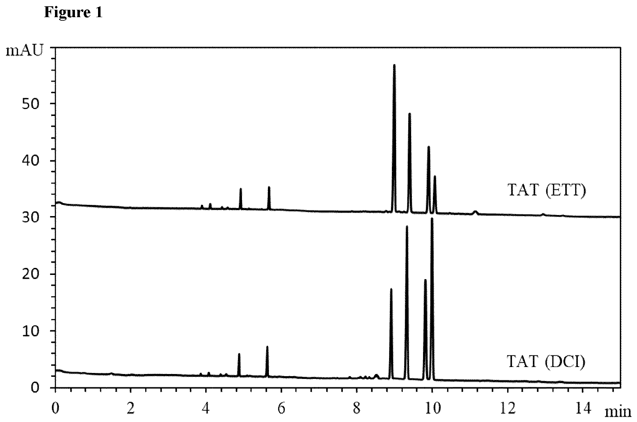

Separation of model sample designed as phosphorothioated trimer (TAT) synthesized by two different activators(ETT and DCI)known to have an effect on resulting diastereomer ratios, see Figure 1.

Separation took place in PVA coated capillary (33 cm total length). The capillary was filled with gel, comprised of 7.2% PVP polymer (molecular mass 1,300,000) dissolved in background electrolyte. Background electrolyte was comprised of 0.1M HEPES/ 0.1M Histidine (pH 6.8). The sample was introduced into capillary by application of -10kV. Separation took place in thermostated capillary (15°C) by application of -20 kV. Analytes were detected by UV detection at 260nm.

### Example 2:

Comparison of CE separation of model sample designed as 5-mer with the following sequence: GCTGG.

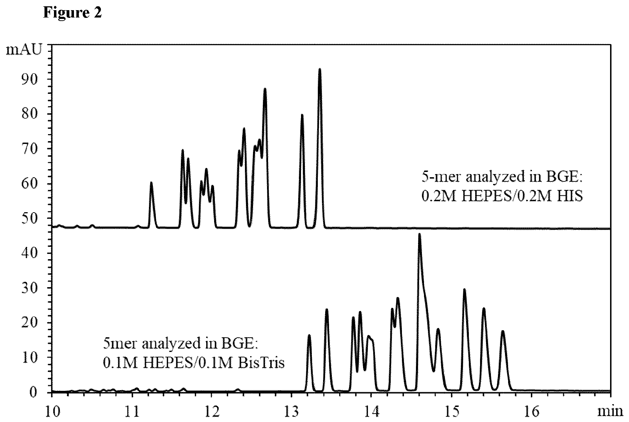

CE conditions were the same as in Example 1, moreover, different BGE compositions were also tested (0.2M HEPES/0.2M HIS and 0.1M HEPES/0.1M Bis-Tris ), see Figure 2.

### Example 3:

Separation of phosphorothioated 18-mer oligonucleotide synthesized by two different activators (ETT and DCI) known to have an effect on resulting diastereomer ratios. The comparison of two 18-mer synthesized by using two different activators with two different batches of reference listed drug (Nusinersen).

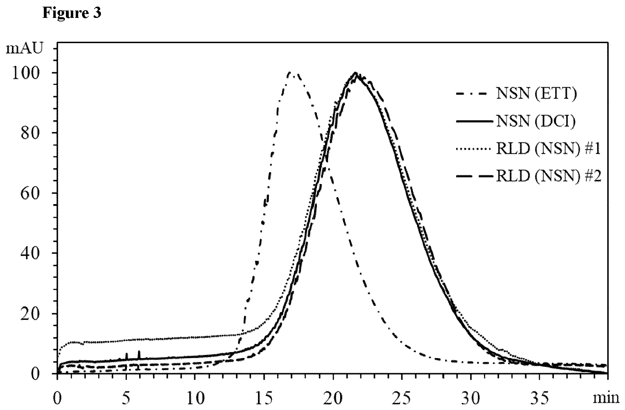

CE conditions were the same as in Example 1, except BGE, that comprised of 0.1M HEPES/ 0.1M Bis-Tris, see Figure 3. UV absorbance signals were normalized for better comparison.

## Claims

1. Method of identification and/or characterization of diastereomers mixtures of nusinersen by capillary gel electrophoresis with a background electrolyte that has a pH 6 to 8, comprising the steps of:
a) preparing a gel matrix by dissolving polyvinylpyrrolidone 1.3M or "copolymer of polyvinylpyrrolidone and vinyl acetate" in a background electrolyte(BGE);
b) introducing the gel matrix in the capillary;
c) contacting the gel matrix with a sample of a diastereomers mixture of nusinersen
d) applying an electric field greater than 200 volts/cm across the gel matrix in the capillary;
e) detecting the individual diastereomers and/or the characteristic groups of partially separated diastereomers of phosphorothioate oligonucleotides,
wherein the background electrolyte is selected from 2-(N-morpholino)ethanesulfonic acid/histidine, 2-[4-(2-Hydroxyethyl)piperazin-1-yl] ethane- 1 -sulfonic acid (HEPES)/ histidine or HEPES/BisTris.

2. The method of claim 1 wherein the concentration of the background electrolyte is from 0.02M to 0.3M.

3. The method of claims 1 to 2 wherein the concentration of polyvinylpyrrolidone 1.3M or "copolymer of polyvinylpyrrolidone and vinyl acetate" is more than 3% w/v.

4. The method of claims 1 to 3 wherein the capillary is thermostated to temperatures from 7 to 20°C.

5. The method of claims 1 to 4 wherein step (d) comprises applying an electric field of about 400 to 1000 volts/cm across the capillary.

6. A capillary gel electrophoresis method of identification and/or characterization of diastereomers mixtures of nusinersen according to claim 1, comprising the step of:
(a) preparing a gel matrix by dissolving polyvinylpyrrolidone 1.3M or "co-polymer polyvinylpyrrolidone and vinylacetate", in a background electrolyte selected from 2-(N-morpholino)ethanesulfonic acid/histidine , HEPES/histidine or HEPES/Bis Tris, having a pH from 6.5 to 7.5.

7. The use of the method of claim 1 to 6 to discriminate between batches with different diastereomers composition of nusinersen,

8. The use of the method of capillary gel electrophoresis according to claim 1 to 6 to select a batch comprising a determined diastereomers composition when the electropherogram complies to a predetermined specification.

## Patentansprüche

1. Verfahren zur Identifizierung und/oder Charakterisierung von Diastereomerengemischen von Nusinersen mittels Kapillargelelektrophorese mit einem Hintergrundelektrolyten, der einen pH von 6 bis 8 aufweist, umfassend die Schritte:
a) Herstellen einer Gelmatrix durch Lösen von 1,3 M Polyvinylpyrrolidon oder "Copolymer aus Polyvinylpyrrolidon und Vinylacetat" in einem Hintergrundelektrolyten (*background electrolyte*, BGE);
b) Einbringen der Gelmatrix in die Kapillare;
c) Inkontaktbringen der Gelmatrix mit einer Probe eines Diastereomerengemischs von Nusinersen;
d) Anlegen eines elektrischen Feldes von mehr als 200 Volt/cm über die Gelmatrix in der Kapillare;
e) Nachweisen der einzelnen Diastereomere und/oder der charakteristischen Gruppen teilweise getrennter Diastereomere von Phosphorthioatoligonukleotiden,
wobei der Hintergrundelektrolyt aus 2-(N-Morpholino)ethansulfonsäure/Histidin, 2-[4-(2-Hydroxyethyl)piperazin-1-yl] ethan-1-sulfonsäure (HEPES)/Histidin, oder HEPES/BisTris ausgewählt ist.

2. Verfahren nach Anspruch 1, wobei die Konzentration des Hintergrundelektrolyten von 0,02 M bis 0,3 M beträgt.

3. Verfahren nach Ansprüchen 1 bis 2, wobei die Konzentration von Polyvinylpyrrolidon 1,3 M oder "Copolymer aus Polyvinylpyrrolidon und Vinylacetat" mehr als 3% (Gew./Vol.) beträgt.

4. Verfahren nach Ansprüchen 1 bis 3, wobei die Kapillare auf Temperaturen von 7 bis 20°C thermostatisiert ist.

5. Verfahren nach Ansprüchen 1 bis 4, wobei Schritt (d) das Anlegen eines elektrischen Feldes von etwa 400 bis 1000 Volt/cm über die Kapillare umfasst.

6. Kapillargelelektrophoreseverfahren zur Identifizierung und/oder Charakterisierung von Diastereomerengemischen von Nusinersen nach Anspruch 1, umfassend den Schritt:
(a) Herstellen einer Gelmatrix durch Lösen von Polyvinylpyrrolidon 1,3 M oder "Copolymer aus Polyvinylpyrrolidon und Vinylacetat" in einem Hintergrundelektrolyten, ausgewählt aus 2-(N-Morpholino)ethansulfonsäure/Histidin, HEPES/Histidin oder HEPES/Bis-Tris, mit einem pH von 6,5 bis 7,5.

7. Verwendung des Verfahrens gemäß Anspruch 1 bis 6 zur Unterscheidung zwischen Chargen mit unterschiedlicher Diastereomerenzusammensetzung von Nusinersen.

8. Verwendung des Verfahrens der Kapillargelelektrophorese gemäß Anspruch 1 bis 6 zur Auswahl einer Charge, die eine bestimmte Diastereomerenzusammensetzung umfasst, wenn das Elektropherogramm einer vorgegebenen Spezifikation entspricht.

## Revendications

1. Procédé d'identification et/ou de caractérisation de mélanges de diastéréomères de nusinersen par électrophorèse capillaire sur gel avec un électrolyte de fond qui présente un pH de 6 à 8, comprenant les étapes de :
a) la préparation d'une matrice de gel par la dissolution de polyvinylpyrrolidone 1,3 M ou de « copolymère de polyvinylpyrrolidone et d'acétate de vinyle » dans un électrolyte de fond (BGE) ;
b) l'introduction de la matrice de gel dans le capillaire ;
c) la mise en contact de la matrice de gel avec un échantillon d'un mélange de diastéréomères de nusinersen ;
d) l'application d'un champ électrique supérieur à 200 volts/cm à travers la matrice de gel dans le capillaire ;
e) la détection des diastéréomères individuels et/ou des groupes caractéristiques de diastéréomères partiellement séparés d'oligonucléotides phosphorothioates,
dans lequel l'électrolyte de fond est sélectionné parmi acide 2-(N-morpholino)éthanesulfonique/histidine, acide 2-[4-(2-hydroxyéthyl)pipérazin-1-yl]éthane-1-sulfonique (HEPES)/histidine ou HEPES/BisTris.

2. Procédé selon la revendication 1 dans lequel la concentration de l'électrolyte de fond est de 0,02 M à 0,3 M.

3. Procédé selon les revendications 1 ou 2 dans lequel la concentration en polyvinylpyrrolidone à 1,3 M ou en « copolymère de polyvinylpyrrolidone et d'acétate de vinyle » est supérieure à 3 % m/v.

4. Procédé selon les revendications 1 à 3 dans lequel le capillaire est thermostaté à des températures de 7 à 20 °C.

5. Procédé selon les revendications 1 à 4 dans lequel l'étape (d) comprend l'application d'un champ électrique d'environ 400 à 1000 volts/cm à travers le capillaire.

6. Procédé d'électrophorèse capillaire sur gel d'identification et/ou de caractérisation de mélanges de diastéréomères de nusinersen selon la revendication 1, comprenant l'étape de :
(a) la préparation d'une matrice de gel par la dissolution de polyvinylpyrrolidone 1,3 M ou d'un « copolymère de polyvinylpyrrolidone et d'acétate de vinyle », dans un électrolyte de fond sélectionné parmi acide 2-(N-morpholino)éthanesulfonique/histidine, HEPES/histidine ou HEPES/BisTris, présentant un pH de 6,5 à 7,5.

7. Utilisation du procédé selon la revendication 1 à 6 pour différentier des lots présentant une composition de diastéréomères de nusinersen différente.

8. Utilisation du procédé d'électrophorèse capillaire sur gel selon la revendication 1 à 6 pour sélectionner un lot comprenant une composition de diastéréomères déterminée lorsque l'électrophérogramme est conforme à une spécification prédéterminée.
